# EUROPÄISCHE PATENTANMELDUNG

(11) **EP 4 083 538 A1**
(43) Veröffentlichungstag der Anmeldung: **02.11.2022**
(21) Anmeldenummer: 22165741.4
(22) Anmeldetag: 31.03.2022
(51) Int. Cl.: F25B 21/02, F25D 19/02, F25D 29/00, F25D 31/00, A47G 19/02, A47J 36/24, A47J 39/02, H02J 7/00, H02J 50/10

(54) **AUFLADE-SCHUBLADE UND TEMPERIERUNGSSYSTEM MIT EINER AUFLADE-SCHUBLADE**

(30) Priorität: 27.04.2021 DE 102021204147
(71) Anmelder: BSH Hausgeräte GmbH, 81739 München (DE)
(72) Erfinder: Bauer, Maximilian, 81669 München (DE); Dudarenka, Alena, 80797 München (DE); Rehfuss, Evgeni, 81827 München (DE); Schmid, Paul, 80333 München (DE)

(57) **Zusammenfassung**

Eine Auflade-Schublade, insbesondere Temperierungslade, zum elektrischen Aufladen von mittels eines Akkus betreibbaren Hausgeräten umfasst einen oben offenen Behälter; eine Schienenführung, um den Behälter horizontal zu verschieben; wobei der Behälter dazu eingerichtet ist, ein mittels eines Akkus elektrisch betreibbares Hausgerät, insbesondere Temperierungsmodul, entnehmbar aufzunehmen; einen Anschluss zur Verbindung mit einem elektrischen Stromnetz; und eine Übertragungseinrichtung zum Übertragen von elektrischer Energie an ein im Behälter aufgenommenes mittels eines Akkus betreibbaren Hausgerät, insbesondere Temperierungsmodul.

## Beschreibung

Die Erfindung betrifft eine Auflade-Schublade und ein Temperierungssystem zur Verwendung in einem Haushalt, insbesondere zum Erwärmen oder Kühlen von Speisen.

Ein Speisenbehälter an einem Esstisch kann warmgehalten werden, indem er auf eine entsprechende Heizung gestellt wird. So kann der Inhalt des Speisenbehälters auch nach längerer Zeit noch eine angenehme Temperatur für den Verzehr aufweisen. Heizungen, die Brennstoff verbrennen, sind oft kostengünstig und kompakt, können aber allgemein schlecht reguliert werden. Eine elektrische Heizung ist hingegen gut steuerbar und kann einfach kabelgebunden oder in Verbindung mit einem elektrischen Energiespeicher in einem kabellosen Gerät eingesetzt werden.

Speisenbehälter können unterschiedlich groß und unterschiedlich geformt sein. Ist die Heizung größer als der Speisenbehälter, so kann eine beträchtliche Heizleistung der Heizung ungenutzt in eine Umgebung entweichen. Ist der Speisenbehälter größer als die Heizung, so kann er nicht gleichmäßig oder nicht ausreichend erwärmt werden. Wird ein großer Speisenbehälter auf mehrere Heizungen gestellt, so können die einzelnen Heizungen schlecht zugänglich sein. Eine gleichmäßige Steuerung der Heizungen kann dadurch erschwert sein.

Ein elektrisches Temperierungselement oder Temperierungsmodul kann dazu verwendet werden, eine Speise zu erwärmen oder abzukühlen. Mehrere Temperierungsmodule können zusammenwirken, um eine vergrößerte Fläche zu bilden, die einheitlich gesteuert werden kann. Ein Temperierungsmodul umfasst üblicherweise ein Temperierungselement zum Erwärmen oder Abkühlen einer Anlagefläche und einen elektrischen Energiespeicher. Der Energiespeicher muss regelmäßig aufgeladen werden, um die Funktion des Temperierungsmoduls sicher zu stellen.

Eine der vorliegenden Erfindung zugrunde liegende Aufgabe besteht in der Angabe einer verbesserten Technik zur Wartung eines Temperierungsmoduls. Die Erfindung löst diese Aufgabe mittels der Gegenstände der unabhängigen Ansprüche. Unteransprüche geben bevorzugte Ausführungsformen wieder.

Eine Temperierungslade umfasst einen oben offenen Behälter; eine Schienenführung, um den Behälter horizontal zu verschieben; wobei der Behälter dazu eingerichtet ist, ein elektrisch betreibbares Temperierungsmodul entnehmbar aufzunehmen; einen Anschluss zur Verbindung mit einem elektrischen Stromnetz; und eine Übertragungseinrichtung für elektrische Energie an ein im Behälter aufgenommenes Temperierungsmodul.

Die Temperierungslade kann dafür eingerichtet sein, beliebige mittels eines Akkus betreibbare Hausgeräte aufzuladen, insbesondere wenn die Temperierungsmodule gerade beispielsweise auf dem Esstisch im Einsatz sind. Insofern handelt es sich bei der Temperierungslade allgemein gesprochen, um eine Auflade-Schublade zum elektrischen Aufladen von mittels eines Akkus betreibbaren Hausgeräten. Der Behälter kann also dazu eingerichtet sein, ein mittels eines Akkus elektrisch betreibbares Hausgerät entnehmbar aufzunehmen und/oder die Übertragungseinrichtung kann zum Übertragen von elektrischer Energie an ein im Behälter aufgenommenes mittels eines Akkus betreibbaren Hausgerät dienen. Als Hausgeräte kommen beispielsweise Stabmixer, Rührgeräte, Mühlen, Reiben, Saftpressen, Kochassistenten, Dosenöffner, Akkuschrauber und Tacker in Betracht.

Die Temperierungslade kann dazu verwendet werden, eines oder mehrere Temperierungsmodule aufzunehmen, die jeweils einzeln oder in Gruppen dazu verwendet werden können, eine Speise oder einer Zutat für eine Speise zu erwärmen oder abzukühlen. Die Temperierungsmodule können beispielsweise während der Zubereitung der Speise, während des Servierens der Speise oder zur Bereithaltung während des Verzehrens der Speise angewendet werden. Eine Speise kann im Behälter temperiert werden oder das Temperierungsmodul kann entnommen werden, um die Speise an einem anderen Ort zu temperieren. Ein Erwärmen einer ersten Speise und ein Abkühlen einer zweiten Speise kann mittels unterschiedlicher Temperierungsmodule parallel erfolgen.

Während ein Temperierungsmodul in der Temperierungslade aufgenommen ist, kann es mit elektrischer Energie versorgt werden. Die Temperierungslade kann in einer Küche gut integriert werden. Insbesondere kann die Temperierungslade als Element einer Küchenzeile ausgebildet sein, wobei sie in eine Front der Zeile optisch oder funktional integriert sein kann. Ein Inhalt der Temperierungslade kann gut gegen Verschmutzung geschützt sein und die Front der Lade kann leicht gereinigt werden, sodass aufgenommene Temperierungsmodule für die Verarbeitung von Lebensmitteln geeignet sind. Die Temperierungsmodule können an einem gemeinsamen Ort leicht entnehmbar aufgenommen sein, sodass sie praktisch gut zugänglich sind. Ein aufgenommenes Temperierungsmodul kann durch die Versorgung mit elektrischer Energie sofort einsatzbereit sein.

Der Behälter kann eine Aufnahme für ein Temperierungsmodul in einer vorbestimmten Position aufweisen, wobei die Übertragungseinrichtung bevorzugt im Bereich der Aufnahme angeordnet ist, um mit dem aufgenommenen Temperierungsmodul zusammenzuwirken. Durch die Anordnung der Temperierungsmodule in Aufnahmen kann eine Energieübertragung leichter oder sicherer gestaltet werden. Für eine vorbestimmte Vielzahl Temperierungsmodule können entsprechend viele Aufnahmen vorgesehen sein. Eine Aufnahme kann eine formschlüssige Aufnahme eines Temperierungsmoduls erlauben, sodass ein Verrutschen in der Lade verhindert ist. Optional kann ein Rastmechanismus vorgesehen sein, um das Temperierungsmodul mit einer vorbestimmten Kraft in der Aufnahme zu sichern. Die Temperierungsmodule können platzsparend im Behälter gestapelt werden, wobei der Behälter einen oder mehrere Stapel unterstützen kann. Ein Stapel für erwärmende Temperierungsmodule kann von einem Stapel für kühlende Temperierungsmodule getrennt sein. Selbstverständlich können Adapter bzw. Formen vorgesehen sein, um die Aufnahme zum Aufnehmen weiterer bzw. anderer Hausgeräte zu optimieren. Beispielsweise sind spezialisierte Einsätze zur verrutschsicheren Aufnahme und zum effizienten Laden von Stabmixern, Rührgeräten, Mühlen, Reiben, Saftpressen, Kochassistenten, Dosenöffnern, Akkuschraubern und Tackern denkbar.

In einer anderen Ausführungsform können die Temperierungsmodule auch in einer Reihe senkrecht angeordnet werden beispielsweise nach Art von Büchern in einem Bücherregal. Die Temperierungsmodule können unmittelbar aneinander anliegen oder zwischen ihnen können Lücken vorgesehen sein, die eine thermische Isolation zwischen den Modulen begünstigen können.

Die Übertragungseinrichtung kann eine Spule zur Bereitstellung eines elektromagnetischen Wechselfelds umfassen. Ein Temperierungsmodul weist dabei eine korrespondierende Spule auf, sodass die Spulen induktiv miteinander gekoppelt werden können, um elektrische Energie zu übertragen. Eine Spule in der Lade kann mit mehreren Spulen verschiedener Temperierungsmodule gekoppelt werden. Die Lade kann auch mehrere Spulen aufweisen. Durch die drahtlose Übertragung elektrischer Energie kann eine Gefahr einer Verletzung oder eines Kurzschlusses verringert sein. Ein Temperierungsmodul kann hermetisch geschlossen sein und keinen elektrischen Kontakt an seiner Oberfläche tragen, sodass es verbessert für die Handhabung von Lebensmitteln sauber gehalten werden kann.

Die Übertragungseinrichtung kann einen federbelasteten Kontakt umfassen, der bevorzugt an einem Gegenkontakt des Moduls anliegt, wenn das Temperierungsmodul an einer vorbestimmten Position in dem Behälter aufgenommen ist. Der Kontakt kann seitens der Lade und/oder seitens des Temperierungsmoduls durch ein elastisches Element vorgespannt sein, um eine sichere Kontaktierung zu gewähren. In einer Ausführungsform umfasst der federbelastete Kontakt eine elastische Kontaktzunge, in einer anderen Ausführungsform einen teleskopartig einschiebbaren Kontakt, wie er unter der Bezeichnung Pogo-Pin bekannt ist. Je nach Orientierung eines Temperierungsmoduls in der Lade kann der Kontakt in horizontaler oder in vertikaler Richtung wirken. Bevorzugt ist der Kontakt so angeordnet, dass ein Eigengewicht des Temperierungsmoduls der elastischen Kraft entgegenwirkt. In einer weiteren Ausführungsform wird eine vorbestimmte Positionierung eines Temperaturmoduls bezüglich des Behälters mittels Magneten sichergestellt. Dazu können am Behälter und am Temperaturmodul jeweils ein Magnet angebracht sein.

Die Temperierungslade kann ferner eine Steuereinrichtung zur Steuerung einer Bereitstellung elektrischer Energie an im Behälter aufgenommene Temperierungsmodule umfassen. Insbesondere wenn eine verfügbare oder übertragbare Energiemenge begrenzt ist, kann die Verteilung von Energie auf mehrere aufgenommene Temperierungsmodule nach einer vorbestimmten Heuristik gesteuert werden. Liegen die Temperierungsmodule beispielsweise in Stapelform in dem Behälter, so kann zunächst das oberste Modul mit Energie versorgt werden, da es voraussichtlich als nächstes entnommen und verwendet wird. Energiespeicher der Temperierungsmodule können gleichzeitig oder nacheinander aufgeladen werden. An die einzelnen Temperierungsmodule übertragene Energiemengen können unterschiedlich groß sein. Beispielsweise kann eine möglichst gleichmäßige Aufladung aller Energiespeicher oder eine priorisierte Aufladung der Energiespeicher vorbestimmter Temperierungsmodule verfolgt werden.

Die Steuereinrichtung kann auch dazu eingerichtet sein, eine Erwärmung oder Kühlung eines im Behälter aufgenommenen Temperierungsmoduls zu steuern. Insbesondere kann ein Temperierungsmodul bereits in der Temperierungslade erwärmt oder abgekühlt werden. Das Temperierungsmodul kann eine dedizierte thermische Masse, beispielsweise in Form eines Metallstücks oder eines Wassertanks aufweisen, die in der Lade auf eine vorbestimmte Temperatur gebracht werden kann, um nach der Entnahme des Temperierungsmoduls wärmend oder kühlend zu wirken. Verschiedenen Positionen für Temperierungsmodule in dem Behälter können verschiedene Temperaturen zugeordnet sein, auf die sie gebracht werden können. Die Erwärmung oder Abkühlung kann mittels eines der Temperierungslade oder dem Temperierungsmodul zugeordneten Elements erfolgen. Ein solches Element kann beispielsweise ein Peltier-Element, eine Phasen-Übergangs-Kühlung, eine elektrische Heizung und/oder einen Lüfter umfassen.

Die Temperierungslade kann ferner einen Sensor zur Unterbrechung einer Übertragung elektrischer Energie an ein Temperierungsmodul umfassen, wenn sich die Schienenführung außerhalb einer vorbestimmten Position befindet. Eine Energieübertragung kann insbesondere nur dann erfolgen, wenn die Lade vollständig geschlossen ist. So kann verhindert werden, dass ein Übertragungselement elektrischen Strom führt, solange die Lade geöffnet ist und ein Benutzer in die Lade greifen kann. In ähnlicher Weise kann auch verhindert werden, dass ein Modul im Behälter erwärmt oder abgekühlt wird, solange die Lade nicht vollständig geschlossen ist. Eine Verletzungsgefahr eines Benutzers kann dadurch verringert sein. Außerdem kann verhindert werden, dass die Temperierungsmodule beheizt oder gekühlt werden, während ein großer Austausch thermischer Energie mit einer Umgebung erfolgt. So kann Energie zur Temperierung eingespart werden.

Nach einem weiteren Aspekt der vorliegenden Erfindung umfasst ein Temperierungsmodul zur elektrischen Erwärmung oder Kühlung, insbesondere einer Speise, einen elektrischen Energiespeicher und eine Einrichtung zur Übernahme elektrischer Energie zum Aufladen des Energiespeichers. Beim elektrischen Energiespeicher kann es sich insbesondere um einen Akku handeln. Das Temperierungsmodul umfasst ferner ein mit Energie aus dem elektrischen Energiespeicher betreibbares Element zur Erwärmung oder Abkühlung einer Anlagefläche. Die Anlagefläche ist bevorzugt horizontal ausgebildet, sodass ein Behälter mit einer Speise auf ihr abgestellt werden kann. Das Temperierungsmodul kann dazu eingerichtet sein, einzeln oder in einer Gruppe aufeinander abgestimmt gesteuerter Module eingesetzt zu werden. Temperierungsmodule können in einer hierin beschriebenen Temperierungslade aufbewahrt und gewartet werden. Das Warten kann insbesondere ein Versorgen mit elektrischer Energie und ein Erwärmen oder Abkühlen des Temperierungsmoduls umfassen.

Das Temperierungsmodul kann eine Übertragungseinrichtung für übernommene elektrische Energie an ein benachbartes Temperierungsmodul umfassen. Eine Übertragungseinrichtung für elektrische Energie von der Lade aus kann mehrere Temperierungsmodule versorgen. So können mehrere Temperierungsmodule in dem Behälter der Temperierungslade aufgenommen und gleichzeitig mit elektrischer Energie versorgt werden.

Nach noch einem weiteren Aspekt der vorliegenden Erfindung umfasst ein Temperierungssystem eine hierin beschriebene Temperierungslade und wenigstens ein hierin beschriebenes Temperierungsmodul. Das Temperierungssystem kann dazu verwendet werden, in einem Haushalt während der Zubereitung, des Servierens oder Speisens eine Speise, eine Zutat für eine Speise oder ein Getränk auf eine vorbestimmte Temperatur zu bringen beziehungsweise auf dieser zu halten.

Die Erfindung wurde mit Bezug auf eine Auflade-Schublade, eine Temperierungslade, ein Hausgerät, ein Temperierungsmodul und ein Temperierungssystem beschrieben. Sofern nichts Anderes angegeben ist, können Merkmale und Vorteile, die mit Bezug auf einen dieser Gegenstände offenbart wurden, analog auf alle anderen genannten Gegenstände übertragen werden.

Ausführungsformen der Erfindung werden nun unter Bezug auf die beiliegenden Figuren genauer beschrieben, in denen:
- Figur 1: ein Temperierungssystem mit einer Temperierungslade und wenigstens einem Temperierungsmodul;
- Figur 2: eine weitere Ausführungsform eines Temperierungssystems; und
- Figuren 3 bis 5: verschiedene Varianten einer Übertragungseinrichtung für Energie für ein Temperierungssystem
darstellt.

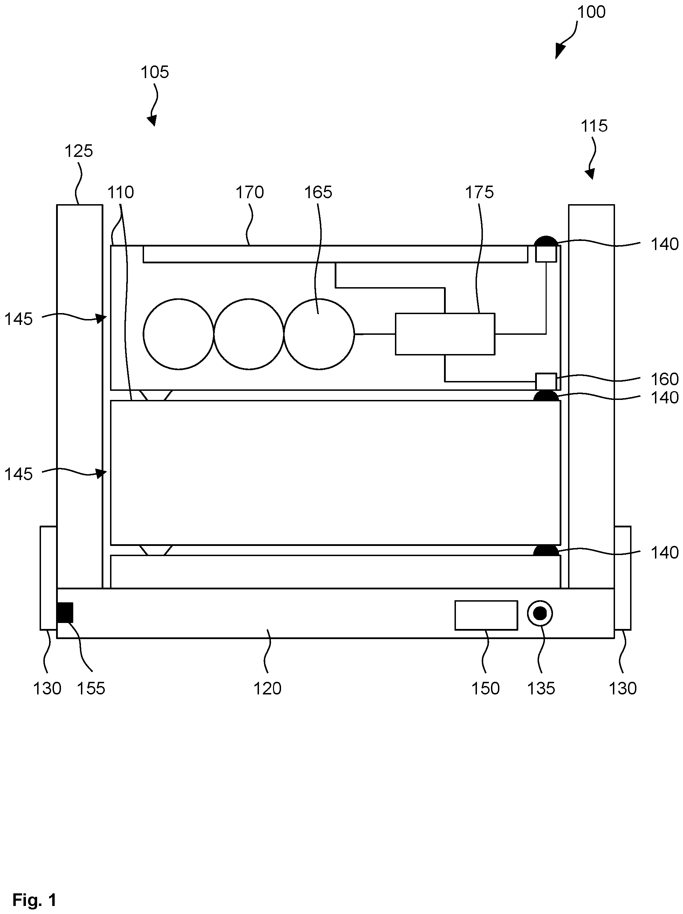

Figur 1 zeigt ein Temperierungssystem 100 mit einer Temperierungslade 105 und mehreren Temperierungsmodulen 110. Die Temperierungslade 105 umfasst einen oben offenen Behälter 115, dessen dem Betrachter zugewandte Seite in Figur 1 nicht dargestellt ist. Der Behälter 115 umfasst einen Boden 120 und optionale Wände 125 auf einer oder mehreren Seiten. Die Temperierungslade 105 umfasst eine Schienenführung 130, die zwischen dem Behälter 115 und einer externen Struktur wirken kann. Die Struktur kann beispielsweise den Korpus eines Möbels umfassen, etwa eines Küchenmöbels, einer Anrichte, eines Schranks oder eines Regals. Die Schienenführung 130 erlaubt eine horizontale Verschiebung des Behälters 115 in einer vorbestimmten Richtung - in Figur 1 auf den Betrachter zu - um einen vorbestimmten Betrag. Der Behälter 115 und die Schienenführung 130 können zusammen eine Art Schublade bilden. Zur Verbindung mit einem elektrischen Stromnetz oder einer anderen elektrischen Energiequelle ist ein elektrischer Anschluss 135 vorgesehen.

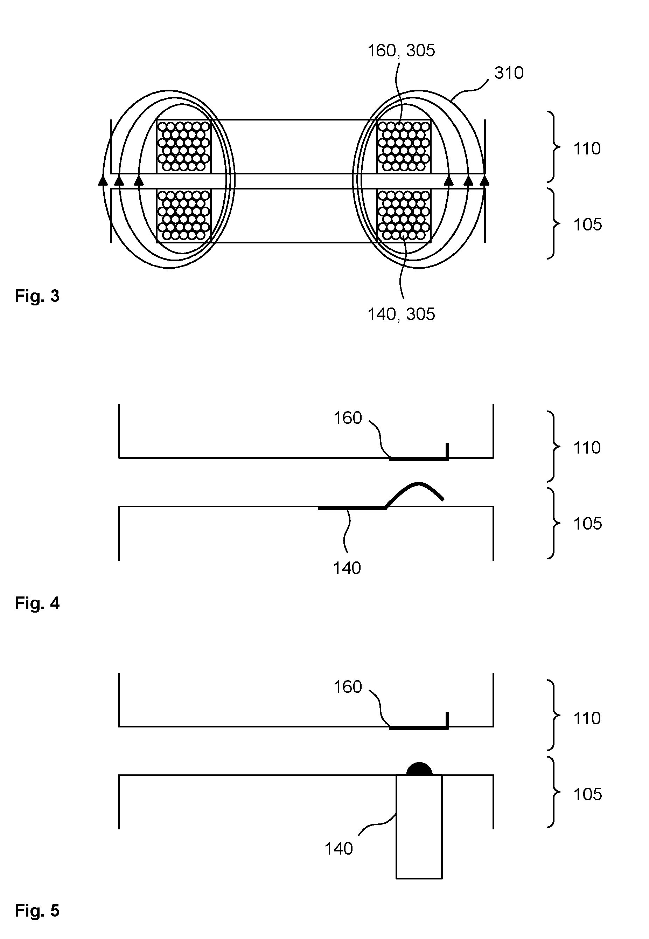

Eine Übertragungseinrichtung 140 für elektrische Energie ist derart am Behälter 115 angebracht, dass elektrische Energie an ein Temperierungsmodul 110 übertragen werden kann. Dazu kann der Behälter 115 eine Aufnahme 145 für das Temperierungsmodul 110 aufweisen, beispielsweise in Form einer freien Fläche auf dem Boden 120 oder als Mulde oder Fach, in welches das Temperierungsmodul 110 eingelegt werden kann. Die Übertragungseinrichtung 140 kann wie dargestellt einen Kontakt beziehungsweise ein Kontaktpaar umfassen, deren Elemente aneinander anliegen, wenn das Temperierungsmodul 110 an einer vorbestimmten Position beziehungsweise in einer Aufnahme 145 liegt. Andere Ausführungsformen für Übertragungseinrichtungen 140 werden unten mit Bezug auf Figuren 3 bis 5 beschrieben.

Eine optionale Steuereinrichtung 150 ist bevorzugt dazu eingerichtet, einen Fluss von Energie vom Anschluss 135 zu den Temperierungsmodulen 110 zu steuern. Die Steuereinrichtung kann auch dazu eingerichtet sein, einen Betrieb eines Temperierungsmoduls 110 zu steuern, während sich dieses im Behälter 115 befindet. Der Betrieb kann insbesondere ein Erwärmen oder Abkühlen des Temperierungsmoduls 110 betreffen. In einer weiteren Ausführungsform kann eine separate Einrichtung zur Erwärmung oder Abkühlung eines Temperierungsmoduls 110 im Behälter 115 vorgesehen sein, die optional durch die Steuervorrichtung 150 gesteuert werden kann.

Ein optionaler Sensor 155 ist dazu eingerichtet, eine Position des Behälters 115 entlang des durch die Schienenführung 130 ermöglichten horizontalen Verschiebewegs zu bestimmen. Insbesondere kann bestimmt werden, ob der Behälter 115 eine vorbestimmte Position eingenommen hat oder nicht. In diesem Fall kann der Sensor 155 beispielsweise einen Schalter oder eine Lichtschranke umfassen. Diese Position kann einer geschlossenen Position der Temperierungslade 105 entsprechen, wobei der Behälter 115 in dieser Position bevorzugt auf seiner Oberseite durch ein externes Element wie einen Fachboden oder eine Platte abgedeckt ist. Die Steuereinrichtung 150 kann den Sensor 155 abfragen und die Versorgung der Temperierungsmodule 110, deren Betrieb im Behälter 115 oder den Betrieb einer optionalen Erwärmungs- oder Kühlungseinrichtung von der bestimmten Position des Behälters 115 abhängig steuern.

Ein Temperierungsmodul 110 ist schematisch und in einer beispielhaften Ausführungsform in einer Schnittansicht dargestellt. Das Temperierungsmodul 110 umfasst eine Übertragungseinrichtung 160, die zur Übertragungseinrichtung 140 der Temperierungslade 105 korrespondiert, einen elektrischen Energiespeicher 165 und ein Temperierungselement 170, das dazu eingerichtet ist, eine Anlagefläche des Temperierungsmoduls 110 elektrisch abzukühlen oder zu erwärmen. Das Temperierungselement 170 kann insbesondere eine Widerstandsheizung oder ein thermoelektrisches Element wie ein Peltier-Element umfassen. Eine Übertragungseinrichtung 140 kann vorgesehen sein, um elektrische Energie an ein weiteres Temperierungsmodul 110 bereitzustellen.

Bevorzugt ist ferner eine Steuereinrichtung 175 vorgesehen, um einen Betrieb des Temperierungselements 170, ein Aufladen des Energiespeichers 165 oder ein Bereitstellen von elektrischer Energie an ein weiteres Temperierungsmodul 110 zu steuern. Außerdem kann die Steuereinrichtung 175 mit der Steuereinrichtung 150 der Temperierungslade 105 kommunizieren, beispielsweise drahtlos, über eine dedizierte Datenleitung oder mittels Modulation eines übertragenen elektrischen Stroms.

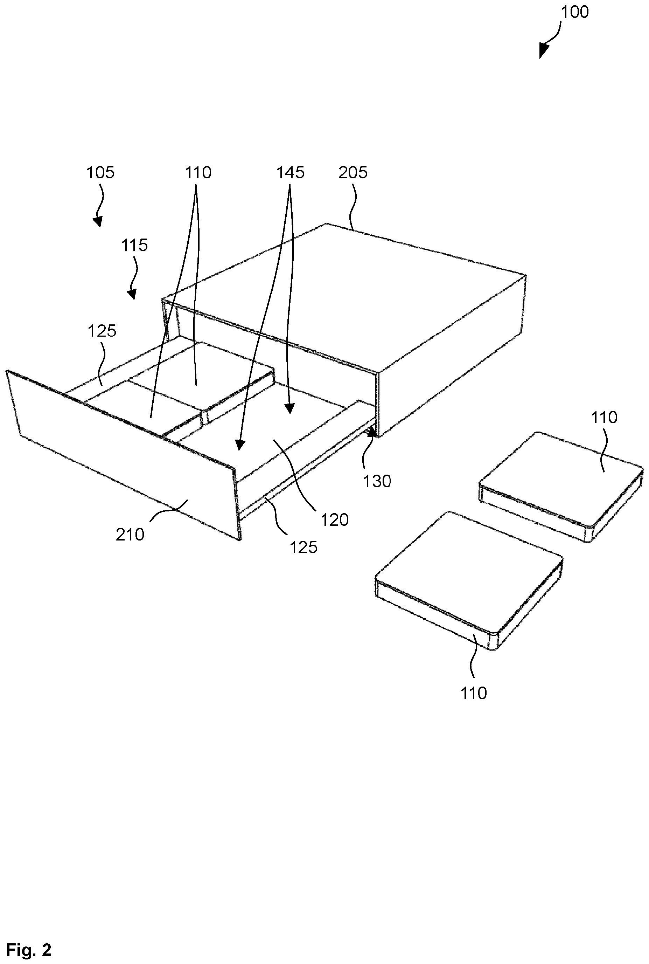

Figur 2 zeigt eine weitere Ausführungsform eines Temperierungssystems 100. Die Temperierungslade 105 ist aus einem Korpus 205, der beispielsweise Teil eines Möbels sein kann, ausgezogen dargestellt. Innerhalb der Schienenführung 130, zwischen Wänden 125 des Behälters 115, sind mehrere Aufnahmen 145 gebildet, in denen jeweils ein Temperierungsmodul 110 aufgenommen werden kann. Zwei von vier beispielhaft vorgesehenen Aufnahmen 145 sind durch je ein Temperierungsmodul 110 belegt, zwei weitere Aufnahmen 145 sind frei. Zwei zusätzliche Temperierungsmodule 110 befinden sich außerhalb des Behälters 115.

Der dargestellte Behälter 115 ist auf einer Seite durch eine Blende 210 abgeschlossen, die als Wand 125 wirkt und sichtbar bleibt, wenn die Temperierungslade 105 in den Korpus 205 eingeschoben ist. Die Blende 210 kann auswechselbar sein, um die Temperierungslade 105 in Möbelfronten mit unterschiedlichen Dekors einzufügen.

Figur 3 zeigt eine erste Variante einer Übertragung elektrischer Energie zwischen der Temperierungslade 105 und einem Temperierungsmodul 110. Die Übertragungseinrichtung 140 seitens der Temperierungslade 105 und die Übertragungseinrichtung 160 seitens des Temperierungsmoduls 110 sind jeweils als Spulen 305 ausgebildet, die induktiv miteinander gekoppelt werden können. Wird eine der Spulen 305 mit einem elektrischen Wechselstrom beaufschlagt, so bildet sich ein elektromagnetisches Wechselfeld 310, sodass in der anderen Spule 305 ein elektrischer Wechselstrom induziert wird. So kann elektrische Energie drahtlos übertragen werden. Ein Erregerstromkreis seitens der Temperierungslade 105 und ein Gleichrichter seitens des Temperierungsmoduls 110 sind nicht dargestellt.

Figur 4 zeigt eine zweite Variante einer Übertragung elektrischer Energie zwischen der Temperierungslade 105 und einem Temperierungsmodul 110. Die Übertragungseinrichtungen 140 und 160 sind jeweils als elektrische Kontakte ausgebildet, die leitfähig aneinander anliegen, um eine Übertragung von Energie zu ermöglichen. Der Kontakt 160 des Temperierungsmoduls 110 ist starr ausgeführt, während der Kontakt 140 der Temperierungslade 105 gebogen und elastisch ausgeführt ist. Eine umgekehrte Ausführungsform ist genauso möglich wie Varianten mit zwei starren oder zwei elastischen Kontakten 140, 160. Der Kontakt 140 ist nach Art einer Kontaktzunge in vertikaler Richtung elastisch; in einer weiteren Ausführungsform kann ein separates elastisches Element zur Bereitstellung einer vertikalen Vorspannung vorgesehen sein. Formen der dargestellten Kontakte 140, 160 sind als beispielhaft zu betrachten.

Figur 5 zeigt eine dritte Variante einer Übertragung elektrischer Energie zwischen der Temperierungslade 105 und einem Temperierungsmodul 110. Auch hier sind die Übertragungseinrichtungen 140 und 160 als elektrische Kontakte ausgeführt, wobei der Kontakt 160 seitens des Temperierungsmoduls 110 wieder starr und der andere Kontakt 140 seitens der Temperierungslade 105 elastisch ausgeführt ist, obwohl auch eine umgekehrte Ausführungsform oder Varianten mit zwei starren oder zwei elastischen Kontakten 140, 160 möglich sind. Der Kontakt 160 kann teleskopartig in vertikaler Richtung eingefahren werden und ist durch ein elastisches Element, insbesondere eine Zylinderfeder, nach oben vorgespannt.

Es ist zu beachten, dass die Ausführungsformen der Figuren 3 bis 5 in einer vertikalen Konstellation dargestellt sind, abweichend davon aber auch horizontal ausgerichtet werden können.

### Bezugszeichen

- 100: Temperierungssystem
- 105: Temperierungslade
- 110: Temperierungsmodul
- 115: Behälter
- 120: Boden
- 125: Wand
- 130: Schienenführung
- 135: Anschluss
- 140: Übertragungseinrichtung
- 145: Aufnahme
- 150: Steuereinrichtung
- 155: Sensor
- 160: Übertragungseinrichtung
- 165: Energiespeicher
- 170: Temperierungselement
- 175: Steuereinrichtung

- 205: Korpus
- 210: Blende

- 305: Spule
- 310: elektromagnetisches Feld

## Patentansprüche

1. Auflade-Schublade, insbesondere Temperierungslade (105), zum elektrischen Aufladen von mittels eines Akkus betreibbaren Hausgeräten, umfassend:
- einen oben offenen Behälter (115);
- eine Schienenführung (130), um den Behälter (115) horizontal zu verschieben;
- wobei der Behälter (115) dazu eingerichtet ist, ein mittels eines Akkus elektrisch betreibbares Hausgerät, insbesondere ein Temperierungsmodul (110), entnehmbar aufzunehmen;
- einen Anschluss zur Verbindung mit einem elektrischen Stromnetz; und
- eine Übertragungseinrichtung (140) zum Übertragen von elektrischer Energie an ein im Behälter (115) aufgenommenes mittels eines Akkus betreibbaren Hausgerät, insbesondere Temperierungsmodul (110).

2. Auflade-Schublade, insbesondere Temperierungslade (105), nach Anspruch 1, wobei der Behälter (115) eine Aufnahme (145) für das mittels eines Akkus betreibbare Hausgerät, insbesondere das Temperierungsmodul (110), in einer vorbestimmten Position aufweist und die Übertragungseinrichtung (140) im Bereich der Aufnahme (145) angeordnet ist.

3. Auflade-Schublade, insbesondere Temperierungslade (105), nach Anspruch 1 oder 2, wobei die Übertragungseinrichtung (140) eine Spule (305) zur Bereitstellung eines elektromagnetischen Wechselfelds (310) umfasst.

4. Auflade-Schublade, insbesondere Temperierungslade (105), nach einem der vorangehenden Ansprüche, wobei die Übertragungseinrichtung (140) einen federbelasteten Kontakt umfasst.

5. Auflade-Schublade, insbesondere Temperierungslade (105) nach einem der vorangehenden Ansprüche, ferner umfassend eine Steuereinrichtung (150) zur Steuerung einer Bereitstellung elektrischer Energie an im Behälter (115) aufgenommene mittels eines Akkus betreibbare Hausgeräte, insbesondere Temperierungsmodule (10).

6. Auflade-Schublade, insbesondere Temperierungslade (105), nach Anspruch 5, wobei die Steuereinrichtung (150) dazu eingerichtet ist, eine Erwärmung oder Kühlung eines im Behälter (115) aufgenommenen Temperierungsmoduls (10) zu steuern.

7. Auflade-Schublade, insbesondere Temperierungslade (105), nach einem der vorangehenden Ansprüche, ferner umfassend einen Sensor (155) zur Unterbrechung einer Übertragung elektrischer Energie an ein mittels eines Akkus betreibbares Hausgerät, insbesondere Temperierungsmodul (110), wenn sich die Schienenführung (130) außerhalb einer vorbestimmten Position befindet.

8. Temperierungsmodul (110) zur elektrischen Erwärmung oder Kühlung, umfassend einen elektrischen Energiespeicher (165) und eine Einrichtung (160) zur Übernahme elektrischer Energie zum Aufladen des Energiespeichers (165).

9. Temperierungsmodul (110) nach Anspruch 8, ferner umfassend eine Übertragungseinrichtung (140) für übernommene elektrische Energie an ein benachbartes Temperierungsmodul (110).

10. Temperierungssystem (100), umfassend eine Temperierungslade (105) nach einem der Ansprüche 1 bis 7 und wenigstens ein Temperierungsmodul (110) nach einem der Ansprüche 8 oder 9.
